# EUROPÄISCHE PATENTSCHRIFT

(11) **EP 3 250 434 B1**
(45) Veröffentlichungstag und Bekanntmachung des Hinweises auf die Patenterteilung: **13.03.2019**
(21) Anmeldenummer: 16705709.0
(22) Anmeldetag: 26.01.2016
(51) Int. Cl.: B61C 15/10, B60B 39/00, B65G 53/46

(54) **ZELLENRADSCHLEUSE UND SANDUNGSANLAGE FÜR EIN SCHIENENFAHRZEUG MIT VERBESSERTEM ANSPRECHVERHALTEN**
CELLULAR ROTARY VALVE AND SANDING SYSTEM FOR A RAIL VEHICLE HAVING IMPROVED RESPONSE BEHAVIOR
VANNE À ROUE CELLULAIRE ET INSTALLATION DE SABLAGE POUR VÉHICULE FERROVIAIRE À RÉPONSE AMÉLIORÉE

(30) Priorität: 28.01.2015 AT 500552015
(43) Veröffentlichungstag der Anmeldung: 06.12.2017
(73) Patentinhaber: Knorr-Bremse Gesellschaft mit beschränkter Haftung, 2340 Mödling (AT)
(72) Erfinder: FUX, Raffel, 1140 Wien (AT); KRISMANIC, Georg, 1020 Wien (AT); LANG, Andreas, 1050 Wien (AT); SCHNEIDER, Albert, 1020 Wien (AT)
(74) Vertreter: Aurigium Leischner & Luthe
(86) Internationale Anmeldenummer: PCT/AT2016/050014
(87) Internationale Veröffentlichungsnummer: WO 2016/118995

(56) Entgegenhaltungen:
- WO-A1-2007/031327
- AT-A1- 505 783
- AT-A4- 503 939
- DE-A1- 3 720 988
- DE-A1- 4 334 231

## Beschreibung

Die Erfindung betrifft eine Zellenradschleuse, welche ein Gehäuse mit einem Einlass und einem Auslass, ein im Gehäuse drehbar gelagertes Zellenrad mit mehreren Zellen und einen Antrieb für das Zellenrad umfasst. Weiterhin betrifft die Erfindung ein Verfahren zum Betrieb einer Zellenradschleuse, aufweisend ein Gehäuse mit einem Einlass und einem Auslass, ein im Gehäuse drehbar gelagertes Zellenrad und einen Antrieb für das Zellenrad. Darüber hinaus betrifft die Erfindung eine Sandungsanlage respektive ein Streugerät für ein Schienenfahrzeug, umfassend eine Zellenradschleuse der oben genannten Art, welche einen mit dem Einlass der Zellenradschleuse verbundenen Behälter zur Aufnahme von Bremssand oder eine mit dem Einlass der Zellenradschleuse verbundene Zuleitung zum Antransport von Bremssand umfasst, sowie eine mit dem Auslass der Zellenradschleuse verbundene Ableitung zum Abtransport von Bremssand. Schließlich betrifft die Erfindung ein Schienenfahrzeug mit einer Sandungsanlage der oben genannten Art.

Eine Zellenradschleuse, eine Sandungsanlage sowie ein Schienenfahrzeug der genannten Art sind grundsätzlich bekannt. Generell dient eine Zellenradschleuse dem Portionieren oder Dosieren von rieselfähigem Gut, beispielsweise von Granulat, Sand oder dergleichen. Ihr Einsatzbereich liegt in industriellen Anlagen aber auch in Sandungsanlagen von Schienenfahrzeugen, wo sie für das Dosieren von Bremssand eingesetzt werden. Der vor die Räder des Schienenfahrzeugs gestreute Sand erhöht die Traktion desselben beim Bremsen und Anfahren.

Beispielsweise offenbart die AT 505 783 A1 dazu ein Streugerät mit einem aus einem Sandbehälter kommenden Sandzulauf, welcher in ein rotierendes Zellenrad mündet, das mit sternförmig angeordneten Kammern zum Füllen des Sandflusses versehen ist.

Generell ist eine rasch einsetzende Förderung beim Einschalten der Zellenradschleuse wünschenswert, was insbesondere für Sandungsanlagen von Schienenfahrzeugen gilt. Diese Forderung wird von Zellenradschleusen aus dem Stand der Technik jedoch nur unzureichend gelöst, da eine Förderung des rieselfähigen Guts erst verzögert nach einem Einschaltbefehl einsetzt.

Eine Aufgabe der Erfindung ist es daher, eine verbesserte Zellenradschleuse und ein verbessertes Betriebsverfahren für eine Zellenradschleuse sowie eine verbesserte Sandungsanlage und ein verbessertes Schienenfahrzeug anzugeben. Insbesondere soll das Ansprechverhalten beim Einschalten verbessert werden, das heißt eine Förderung eines rieselfähigen Guts soll unmittelbar oder wenigstens nach nur kurzer Verzögerungszeit nach einem Einschaltbefehl einsetzen.

Die Aufgabe der Erfindung wird mit einer Zellenradschleuse der eingangs genannten Art gelöst, welche eine mit dem Antrieb verbundene Steuerung/Regelung umfasst, die dazu eingerichtet ist, den Antrieb bei Erkennung eines Ausschaltbefehls oder Wegfall eines Einschaltbefehls so lange nachlaufen zu lassen, bis das Zellenrad eine im Hinblick auf einen zwischen einer Zelle des Zellenrads und dem Einlass/Auslass liegenden Relativwinkel vorgegebene oder vorgebbare Position erreicht hat.

Die Aufgabe der Erfindung wird weiterhin mit einem Betriebsverfahren der eingangs genannten Art gelöst, bei dem der Antrieb bei Erkennung eines Ausschaltbefehls und/oder Wegfall eines Einschaltbefehls so lange nachläuft, bis das Zellenrad eine im Hinblick auf einen zwischen einer Zelle des Zellenrads und dem Einlass/Auslass liegenden Relativwinkel vorgegebene oder vorgebbare Position erreicht hat.

Die Aufgabe der Erfindung wird auch mit einer Sandungsanlage / einem Streugerät der eingangs genannten Art gelöst, bei welcher eine Zellenradschleuse obiger Bauform eingesetzt wird.

Schließlich wird die Aufgabe der Erfindung durch ein Schienenfahrzeug gelöst, welche eine Sandungsanlage der oben genannten Art aufweist.

Durch die vorgeschlagenen Maßnahmen wird das Zellenrad bei Erkennung eines Ausschaltbefehls und/oder Wegfall eines Einschaltbefehls an einer definierten Position angehalten, sodass eine Förderung des rieselfähigen Guts beim nächsten Einschalten nach einer definierten Verzögerungszeit einsetzt. Insbesondere ist es von Vorteil, wenn das Zellenrad beim Ausschalten des Antriebs so angehalten wird, dass eine Begrenzungswand einer Zelle unmittelbar vor einem Auslass zu liegen kommt. Auf diese Weise setzt die Förderung des rieselfähigen Guts praktisch verzögerungsfrei nach einem Einschaltbefehl ein. Somit kann die Ansprechzeit der Zellenradschleuse und einer Sandungsanlage verringert werden, sodass der Bremsweg eines Schienenfahrzeugs insgesamt verkürzt wird.

Die Angabe "unmittelbar" bedeutet in obigem Zusammenhang insbesondere, dass der Relativwinkel zwischen einer Zellenwand/Transportwand, welche eine Zelle des Zellenrads begrenzt, und einer Öffnungskante eines Auslasses in der Position, in der das Zellenrad letztlich angehalten wird, weniger als 20% des Zellwinkels beträgt, welcher zwischen zwei aufeinander folgenden Zellwänden liegt. Die Öffnungskante ist dabei jene Kante des Auslasses, welche die Zellenwand/Transportwand bei Bewegung zuerst erreicht.

Ist die besagte Position des Zellenrads vorgegeben (fix), dann wird das Zellenrad bei Erkennung eines Ausschaltbefehls im Hinblick auf den zwischen der Zelle des Zellenrads und dem Einlass beziehungsweise dem Auslass liegenden Relativwinkel im Wesentlichen immer an derselben Position angehalten. Mit anderen Worten wird das Zellenrad beim Ausschalten des Antriebs derart angehalten, dass ein zwischen der Zelle des Zellenrads und dem Einlass/Auslass liegender Relativwinkel im Wesentlichen immer gleich ist.

Die besagte Position kann aber auch vorgebbar (einstellbar) sein. In diesem Fall kann vorgesehen sein, dass der Antrieb bei Erkennung eines Befehls zum Ausschalten so lange nachläuft, bis der zwischen einer Zelle des Zellenrads und dem Einlass/Auslass liegende Relativwinkel den vorgebbaren Wert erreicht hat. Anstelle des besagten Relativwinkels kann aber auch ein anderer Parameter zum Anhalten des Zellenrad herangezogen werden.

Generell kann vorgesehen sein, dass für das Anhalten des Zellenrads nur eine einzige Zelle als Bezugspunkt herangezogen wird. Das Zellenrad nimmt beim Ausschalten des Antriebs daher genau eine vorgegebene oder vorgebbare Position ein.

Denkbar ist aber auch, dass für das Anhalten des Zellenrads mehrere Zellen, insbesondere alle Zellen, als Bezugspunkte herangezogen werden. Das Zellenrad kann beim Ausschalten des Antriebs demzufolge eine von mehreren möglichen Positionen einnehmen. Wenn alle Zellen als Bezugspunkte herangezogen werden, entspricht die Anzahl der möglichen Positionen der Anzahl der Zellen.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn die Zellenradschleuse Mittel zur Bestimmung des Relativwinkels zwischen Zellenrad und Gehäuse aufweist. Mit Hilfe dieser Mittel ist es in Folge auf einfache Weise möglich, das Zellenrad in einer definierten Position anzuhalten.

Vorteilhaft ist es in obigem Zusammenhang, wenn die Mittel zur Bestimmung des genannten Relativwinkels durch zumindest einen im Bereich des Gehäuses angeordneten, induktiven Näherungssensor gebildet sind. Insbesondere ist der zumindest eine induktive Näherungssensor am oder im Gehäuse angeordnet. Dabei macht man sich den Umstand zu Nutze, dass die sternförmig angeordneten Zellwände das vom induktiven Näherungssensor erzeugte Magnetfeld anders beeinflussen als der zwischen den Zellwänden liegende Bereich. Bei Drehung des Zellenrads kommt es somit zu einem periodischen Empfangssignal im induktiven Näherungssensor, das für die Positionierung des Zellenrads herangezogen werden kann. Bei einer besonders vorteilhaften Ausführungsform ist lediglich ein einziger induktiver Näherungssensor im Bereich des Gehäuses vorgesehen.

Vorteilhaft ist es aber auch, wenn die Mittel zur Bestimmung des genannten Relativwinkels durch zumindest einen am oder im Zellenrad angeordneten Magneten und durch zumindest einen im Bereich des Gehäuses angeordneten Sensor zur Erfassung eines Magnetfelds, insbesondere durch ein Reed-Relais oder einen Hall-Sensor, gebildet sind. Bei Drehung des Zellenrads verursachen die Magnete wiederum ein periodisches Signal im Sensor, das für die Positionierung des Zellenrads herangezogen werden kann. Bei einer besonders vorteilhaften Ausführungsform sind eine der Anzahl der Zellen des Zellenrads entsprechende Anzahl an Magneten und ein einziger Sensor zur Erfassung eines Magnetfelds, oder eine der Anzahl der Zellen des Zellenrads entsprechende Anzahl an Sensoren und ein einziger Magnet vorgesehen. Insbesondere ist der Sensor zur Erfassung eines Magnetfelds am oder im Gehäuse angeordnet.

In einer weiteren vorteilhaften Ausgestaltung der Zellenradschleuse sind die Mittel zur Bestimmung des genannten Relativwinkels durch einen Drehwinkelgeber gebildet, welcher auf einer Welle des Zellenrads angeordnet ist. Solche (digitalen oder analogen) Drehwinkelgeber weisen zumeist eine sehr hohe Winkelauflösung auf, wodurch das Zellenrad in einer nahezu beliebigen Position angehalten werden kann. Selbstverständlich kann ein solcher Drehwinkelgeber auch bei Einsatz eines Getriebes verwendet werden. Insbesondere wenn das Getriebe drehzahlsenkend ist, erlaubt ein motorseitig montierter Drehgeber eine besonders hohe Auflösung des Drehwinkels des Zellenrads.

Von Vorteil ist es in obigem Zusammenhang daher auch, wenn der Antrieb durch einen Rotationsmotor gebildet ist oder einen solchen umfasst und die Mittel zur Bestimmung des genannten Relativwinkels durch einen Drehwinkelgeber gebildet sind, welcher auf einer Welle des Rotationsmotors angeordnet ist, beziehungsweise wenn der Rotationsmotor mit einem Drehwinkelgeber ausgerüstet ist. Prinzipiell können Gleichstrommotoren, Synchronmotoren und Asynchronmotoren gleichermaßen für den Antrieb genutzt werden. Selbstverständlich kann ein Drehwinkelgeber im Grunde auch auf einer Welle eines Getriebes eingesetzt werden, sofern ein solches vorgesehen ist.

In einer weiteren vorteilhaften Ausführungsvariante ist der Antrieb durch einen Schrittmotor gebildet oder umfasst einen solchen. Dieser ermöglicht das Anhalten des Zellenrads in einer nahezu beliebigen Position auch ohne den Einsatz eines Drehwinkelgebers.

Vorteilhaft ist es weiterhin, wenn die Anzahl der Zellen des Zellenrads nicht ganzzahlig durch die Anzahl der Auslässe teilbar ist. Auf diese Weise ergeben sich bei einer beliebigen Stellung des Zellenrads zumindest teilweise verschiedene Differenzwinkel zwischen den Auslässen und den Zellen des Zellenrads. Auf diese Weise kann die Nachlaufzeit des Zellenrads reduziert werden, da wegen der verschiedenen Differenzwinkel auch ein kleinster Differenzwinkel existiert. Von Vorteil ist es nun, für die Positionierung des Zellenrads jene Zellenradwand heranzuziehen, die den kleinsten Differenzwinkel zur endgültigen Position vor einem Auslass aufweist. Insbesondere kann die Zellenradschleuse zumindest zwei Auslässe aufweisen und/oder zumindest zwei Einlässe und im Speziellen dieselbe Anzahl an Einlässen und Auslässen. Die Drehachse des Zellenrads kann zudem insbesondere vertikal ausgerichtet sein oder horizontal.

Besonders vorteilhaft ist es, wenn
- eine Zelle des Zellenrads auf einer Seite von einer in eine Drehrichtung des Zellenrads weisenden Zellenwand/Transportwand begrenzt ist, welche von einem inneren Durchmesser des Zellenrads zu einem äußeren Durchmesser desselben verläuft,
- das Gehäuse mehrere einander paarweise zugeordnete und in Drehrichtung des Zellenrads abwechselnd angeordnete Einlässe und Auslässe aufweist,
- ein Auslass eine Öffnungskante aufweist, welche von einem inneren Durchmesser des Gehäuses zu einem äußeren Durchmesser desselben verläuft,
- zumindest ein mit dem Zellenrad konzentrischer Kreis existiert, welcher die Transportwände des Zellenrads an mehreren Zellenrad-Schnittpunkten und die Öffnungskanten der Auslässe an mehreren Auslass-Schnittpunkten schneidet, und
- die auf diesem Kreis zwischen je einem Zellenrad-Schnittpunkt und je einem Auslass-Schnittpunkt liegenden Kreisbogenabschnitte alle unterschiedlich lang sind.
Das heißt mit anderen Worten, dass die Differenzwinkel zwischen den Auslässen und den Zellen des Zellenrads bei einer beliebigen Stellung des Zellenrads (alle) unterschiedlich groß sind, wobei für die Auslässe jeweils dieselben Auslass-Bezugspunkte und für die Zellen jeweils Zellenrad-Bezugspunkte herangezogen werden. Konkret ist als Auslass-Bezugspunkt ein Auslass-Schnittpunkt und als Zellenrad-Bezugspunkt ein Zellenrad-Schnittpunkt vorgesehen, welche sich durch Schneiden eines Kreises mit den Öffnungskanten beziehungsweise Transportwänden ergeben. Vom Drehpunkt des Zellenrads aus können Zellenrad-Radialstrahlen zu den Zellenrad-Schnittpunkten und Auslass-Radialstrahlen zu den Auslass-Schnittpunkten gezogen werden. Die Differenzwinkel zwischen einem Zellenrad-Radialstrahl und einen Auslass-Radialstrahl sind alle unterschiedlich groß. Durch die vorgeschlagenen Maßnahmen kann die Nachlaufzeit noch weiter reduziert werden, wenn für die Positionierung des Zellenrads jene Zellenradwand herangezogen wird, welche den kleinsten Differenzwinkel zur endgültigen Position vor einem Auslass aufweist.

Die Ungleichheit der genannten Kreisbogenabschnitte respektive Differenzwinkel ist insbesondere auch dann gegeben, wenn die Zellenwände und die Auslässe über den Umfang gleichmäßig verteilt angeordnet sind und das kleinste gemeinsame Vielfache des zwischen zwei aufeinanderfolgen Zellenwänden liegenden Zellwinkels und des Auslasswinkels, der zwischen zwei Öffnungskanten zweier aufeinanderfolgender Auslässe liegt, größer oder gleich 360° ist. Auf diese Weise kann die Nachlaufzeit des Zellenrads ebenfalls gering gehalten, beziehungsweise das Ansprechverhalten der Zellenradschleuse verbessert werden.

Günstig ist es, wenn die Drehzahl des Zellenrads entsprechend des durch die Zellenradschleuse zu führenden Materialstroms eingestellt wird. Dies gelingt besonders gut bei Einsatz eines Drehwinkelgebers oder Schrittmotors.

Günstig ist es weiterhin, wenn ein Zeitpunkt zum Ausschalten des Antriebs entsprechend der durch die Zellenradschleuse zu führenden Materialmenge und
- anhand der seit dem Einschalten des Antriebs verstrichenen Zeit und der Drehzahl des Zellenrads oder
- anhand des seit dem Einschalten des Antriebs vom Zellenrad zurückgelegten Drehwinkels eingestellt wird.
Auf diese Weise kann die Zellenradschleuse gut zum Portionieren des rieselfähigen Guts eingesetzt werden.

Günstig ist es dabei auch, wenn die zwischen einem Einschalten und einem Ausschalten des Antriebs durch die Zellenradschleuse geführte Materialmenge einem ganzzahligen Vielfachen der im Zellenrad oder der in einer Zelle des Zellenrads aufgenommenen Menge entspricht. Besonders günstig ist es dabei, wenn ein vorgegebener Sollwert für die durch die Zellenradschleuse zu führende Materialmenge auf ein ganzzahliges Vielfaches der im Zellenrad respektive in einer Zelle des Zellenrads aufgenommenen Menge auf- oder abgerundet wird. Dadurch kann praktisch eine beliebige zu transportierende Materialmenge vorgegeben werden, ohne auf die speziellen durch die Zellenradschleuse bedingten Gegebenheiten Rücksicht nehmen zu müssen.

Besonders vorteilhaft ist es bei einer Verwendung des Betriebsverfahrens für eine Zellenradschleuse in einer Sandungsanlage eines Schienenfahrzeugs, wenn der Antrieb bei Erkennung eines Ausschaltbefehls und/oder Wegfall eines Einschaltbefehls nur dann nachläuft, wenn das Schienenfahrzeug eine vorgebbare Mindestgeschwindigkeit überschreitet. Demgemäß ist es besonders vorteilhaft, wenn die Steuerung/Regelung der Sandungsanlage / des Streugeräts dazu eingerichtet ist, den Antrieb bei Erkennung eines Ausschaltbefehls und/oder Wegfall eines Einschaltbefehls nur dann nachlaufen zu lassen, wenn das Schienenfahrzeug eine vorgebbare Mindestgeschwindigkeit überschreitet. Auf diese Weise werden Anhäufungen von Bremssand auf den Schienen bei langsamer Fahrt oder beim Halt des Schienenfahrzeugs vermieden. In weitere Folge wird damit auch ein fehlerhaftes Verhalten einer elektronischen Gleis-Besetzt-Detektion vermieden, welche insbesondere dann auftreten kann, wenn das Schienenfahrzeug auf größere Mengen von Bremssand auffährt und ein elektrischer Widerstand zwischen Gleis und Schienenfahrzeug so hoch wird, dass das Gleis nicht mehr als besetzt erkannt wird. Schwere Unfälle mit Personenschaden und Sachschaden können die Folge sein. Durch die oben genannten Maßnahmen können solche Unfälle vermieden werden.

Besonders vorteilhaft ist es auch, wenn der Antrieb bei Erkennung eines Ausschaltbefehls und/oder Wegfall eines Einschaltbefehls mit einer von der Geschwindigkeit des Schienenfahrzeugs abhängigen Drehzahl nachläuft. Demgemäß ist es besonders vorteilhaft, wenn die Steuerung/Regelung der Sandungsanlage / des Streugeräts dazu eingerichtet ist, den Antrieb bei Erkennung eines Ausschaltbefehls und/oder Wegfall eines Einschaltbefehls mit einer von der Geschwindigkeit des Schienenfahrzeugs abhängigen Drehzahl nachlaufen zu lassen. Insbesondere steigt die Drehzahl des Antriebs mit steigender Geschwindigkeit des Schienenfahrzeugs. Auf diese Weise können die oben genannten Anhäufungen von Bremssand auf dem Gleis ebenfalls vermieden. Im Speziellen ist es auch von Vorteil, wenn die beiden Maßnahmen kombiniert auftreten. Beispielsweise kann eine Mindestgeschwindigkeit des Schienenfahrzeugs vorgesehen sein, ab welcher sich der Antrieb der Zellenradschleuse mit steigender Geschwindigkeit des Schienenfahrzeugs immer schneller dreht.

An dieser Stelle wird darauf aufmerksam gemacht, dass sich die zur Zellenradschleuse offenbarten Ausführungsvarianten und die daraus resultierenden Vorteile gleichermaßen auf das Betriebsverfahren für eine Zellenradschleuse, auf die Sandungsanlage sowie auf das Schienenfahrzeug beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes schematisch dargestelltes Beispiel für eine Zellenradschleuse mit Direktantrieb und Positionssteuerung/-regelung;
- Fig. 2: wie Fig. 1, nur mit einem zwischen Motor und Zellenrad angeordneten Getriebe;
- Fig. 3: eine Zellenradschleuse in Draufsicht mit einer der Anzahl der Zellen entsprechenden Anzahl an Magneten auf dem Zellenrad und einem einzigen Sensor zur Erfassung derselben;
- Fig. 4: wie Fig. 3, nur mit einer anderen Endposition des Zellenrads;
- Fig. 5: eine Zellenradschleuse in Draufsicht mit einer der Anzahl der Zellen entsprechenden Anzahl an Sensoren und einem einzigen Magneten auf dem Zellenrad;
- Fig. 6: eine Zellenradschleuse in Draufsicht mit einem induktiven Näherungssensor;
- Fig. 7: ein Beispiel für eine Zellenradschleuse, bei der die Anzahl der Zellen des Zellenrads und die Anzahl der Auslässe nicht ganzzahlig teilbar sind und
- Fig. 8: ein schematisch dargestelltes Beispiel für eine Sandungsanlage in einem Schienenfahrzeug.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

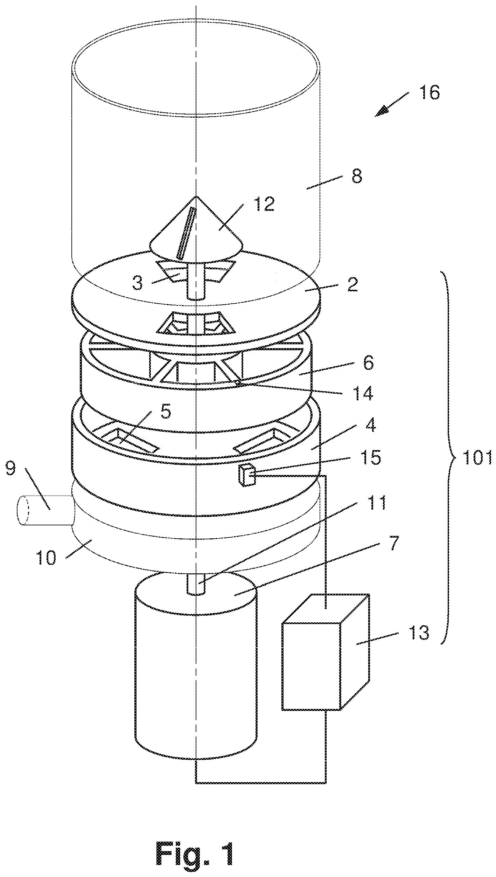

Fig. 1 zeigt ein erstes, schematisch dargestelltes Beispiel einer Zellenradschleuse 101, welche ein Gehäuse mit einem Gehäuseoberteil 2 mit obenliegenden Einlässen 3 und einem Gehäuseunterteil 4 mit untenliegenden Auslässen 5 sowie ein im Gehäuse 2, 4 drehbar gelagertes Zellenrad 6 mit mehreren Zellen aufweist. Weiterhin umfasst die Zellenradschleuse 101 einen mit dem Zellenrad 6 gekoppelten Antrieb 7, der hier als Rotationsmotor (insbesondere als Elektromotor) ausgebildet ist. Zudem umfasst die Anordnung einen optionalen mit den Einlässen 3 der Zellenradschleuse 101 verbundenen Schüttgutbehälter 8 zur Aufnahme eines rieselfähigen Guts respektive ein Zuführrohr zum Antransport des rieselfähigen Guts und eine optionale mit den Auslässen 5 der Zellenradschleuse 101 verbundene Ableitung 9 zum (Ab)Transport des rieselfähigen Guts. Die Ableitung 9 ist in diesem Beispiel über einen optionalen Sammler 10 an die Zellenradschleuse 101 angebunden. Der Motor 7 ist unterhalb der Auslässe 5 angeordnet und in dem in Fig. 1 konkret dargestellten Beispiel über eine Welle 11 mit dem Zellenrad 6 gekoppelt. Zusätzlich umfasst Zellenradschleuse 101 einen optionalen mit der Welle 11 gekoppelten Aktivator 12, welcher im Behälter 8 angeordnet ist.

In der Fig. 1 ist der Behälter 8 der besseren Darstellbarkeit durchsichtig dargestellt. Das Zuführrohr beziehungsweise der Schüttgutbehälter 8, der Sammler 10 und das Abführrohr 9 sind nicht unbedingt Teil der Zellenradschleuse 101 und deshalb mit dünnen Linien dargestellt. Zudem ist die Welle 11 gegebenenfalls länger dargestellt, als sie in der Realität ist, um die Kopplung zwischen dem Zellenrad 6 und dem Motor 7 auch in der Explosionszeichnung deutlich darstellen zu können.

Neben den bereits genannten Teilen umfasst die Zellenradschleuse 101 auch eine mit dem Motor/Antrieb 7 verbundene Steuerung/Regelung 13, welche dazu eingerichtet ist, den Antrieb 7 bei Erkennung eines Ausschaltbefehls oder Wegfall eines Einschaltbefehls so lange nachlaufen zu lassen, bis das Zellenrad 6 eine im Hinblick auf einen zwischen einer Zelle des Zellenrads 6 und dem Einlass 3 / dem Auslass 5 liegenden Relativwinkel vorgegebene oder vorgebbare Position erreicht hat.

Schließlich umfasst die Zellenradschleuse 101 einen am oder im Zellenrad 6 angeordneten Magneten 14 und einen im Bereich des Gehäuses 2, 4 angeordneten Sensor 15 zur Erfassung eines Magnetfelds, welche in diesem Beispiel Mittel zur Bestimmung des Relativwinkels zwischen Zellenrad 6 und Gehäuse 2, 4 bilden. Im Folgenden wird angenommen, dass der Sensor 15 zur Erfassung eines Magnetfelds durch ein Reed-Relais gebildet ist. Alternativ könnte auch ein Hall-Sensor oder ein anderer Sensor zur Erfassung eines Magnetfelds eingesetzt werden.

Die Funktion der Zellenradschleuse 101 ist nun wie folgt:
Über das Zuführrohr / den Schüttgutbehälter 8 wird rieselfähiges Gut, zum Beispiel Granulat, Sand oder dergleichen an die Zellenradschleuse 101 herangeführt. Über die beiden Einlässe 3 dringt es in die Kammern des Zellenrads 6 vor, gelangt im Stillstand des Zellenrads 6 von dort aber nicht weiter. Wird das Zellenrad 6 in Rotation versetzt, so schieben die Zellenradflügel das in den Zellenradkammern befindliche Material zu den Auslässen 5, wo es hindurch in den Sammler 10 fällt und von dort über das Abführrohr 9 abtransportiert wird, beispielsweise mit Hilfe von Druckluft. Über den von der Welle 11 angetriebenen Aktivator 12 wird verhindert, dass das rieselfähige Gut verklumpt. Dieser kann zu diesem Zweck wie dargestellt Rippen aufweisen, jedoch auch mit etwas weiter auskragenden Rührflügeln ausgestattet sein.

In dem in Fig. 1 dargestellten Beispiel weist das Gehäuse 2, 4 zwei Einlässe 3 und zwei Auslässe 5 auf. Weiterhin weist das Zellenrad 6 sechs Kammern/Zellen auf. Selbstverständlich ist dies nur als illustratives Beispiels zu sehen. Natürlich kann die Zahl der Einlässe 3 und Auslässe 5 sowie der Kammern auch von der Darstellung abweichen.

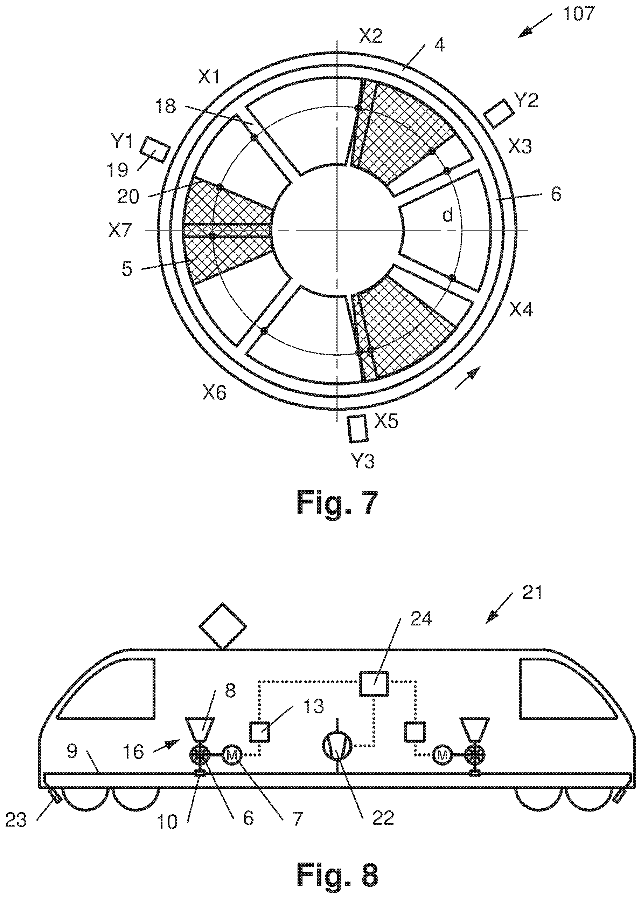

Im Speziellen kann die in der Fig. 1 dargestellte Anordnung eine Sandungsanlage beziehungsweise ein Streugerät 16 eines Schienenfahrzeugs bilden oder Teil einer solchen sein. Das rieselfähige Gut wird in diesem Fall durch Bremssand gebildet, welcher durch die Zellenradschleuse 101 portioniert zu den Rädern eines Schienenfahrzeugs geleitet wird und dort dessen Traktion beim Anfahren und Bremsen verbessert (siehe auch Fig. 8)

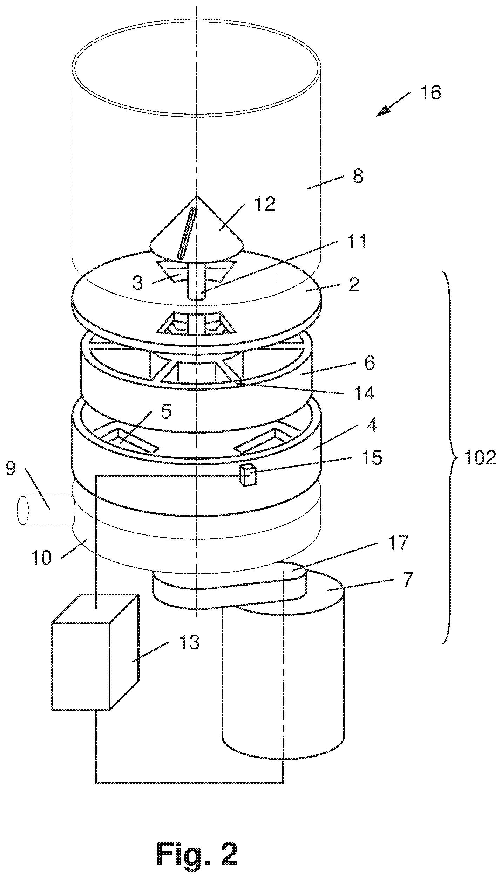

In der Fig. 1 sind die Drehachse des Zellenrads 6 und die Motorwelle koaxial an-geordnet. Denkbar wäre aber auch, dass die beiden Achsen parallel zueinander ausgerichtet sind. Fig. 2 zeigt dazu ein Beispiel einer Zellenradschleuse 102, bei dem der Motor 7 die Welle 11 über ein Getriebe 17 antreibt, das unterhalb des Gehäuses 2,4 angeordnet ist. Das Getriebe 17 kann beispielsweise als Riemengetriebe, Kettentrieb oder auch als Stirnradgetriebe ausgebildet sein. Als Riemen kommen zum Beispiel Flachriemen, Rundriemen, Zahnriemen, Keilriemen oder Keilrippenriemen in Betracht.

Selbstverständlich ist eine parallele beziehungsweise koaxiale Ausrichtung der Drehachse des Zellenrads 6 und der Motorwelle nicht zwingend, sondern diese können auch winkelig zueinander angeordnet sein. Beispielsweise können der Motor 7 und die Welle 11 über ein Kegelradgetriebe, Kronenradgetriebe, Schneckengetriebe oder auch über ein Torusgetriebe (erhältlich bei der Firma Tedec AG, http://torus-gear.com) miteinander gekoppelt sein.

Wie erwähnt läuft der Antrieb 7 bei Erkennung eines Ausschaltbefehls und/oder Wegfall eines Einschaltbefehls so lange nach, bis das Zellenrad 6 eine im Hinblick auf einen zwischen einer Zelle des Zellenrads 6 und dem Einlass 3 / Auslass 5 liegenden Relativwinkel vorgegebene oder vorgebbare Position erreicht hat. In dem konkret dargestellten Beispiel bewirkt die Steuerung/Regelung 13 ein Nachlaufen des Zellenrads 6, bis der Magnet 14 eine Änderung des Schaltzustands des Reed-Relais 15 bewirkt, die durch die Steuerung/Regelung 13 ausgewertet wird. Das heißt, das Zellenrad 6 bleibt bei einem Ausschaltbefehl und/oder Wegfall eines Einschaltbefehl nicht sofort stehen, sondern dreht sich noch so lange weiter, bis die in den Figuren 1 und 2 dargestellte Position erreicht ist. Somit kommt eine Begrenzungswand einer Zelle unmittelbar vor dem Auslass 5 zu liegen.

Dadurch wird die Ansprechzeit der Zellenradschleuse 101, 102 verkürzt beziehungsweise minimiert, da ja beim nächsten Einschaltbefehl sofort rieselfähiges Gut in den Auslass 5 befördert wird. Im Falle einer Sandungsanlage 16 eines Schienenfahrzeugs kann so der Bremsweg desselben verkürzt werden.

In den Beispielen nach Fig. 1 oder 2 wird für das Anhalten des Zellenrads 6 nur eine einzige Zelle als Bezugspunkt herangezogen wird. Das Zellenrad 6 nimmt beim Ausschalten des Antriebs 7 daher genau eine vorgegebene Position ein.

Denkbar ist aber auch, dass für das Anhalten den Zellenrads 6 mehrere Zellen, insbesondere alle Zellen, als Bezugspunkte herangezogen werden. Das Zellenrad 6 kann beim Ausschalten des Antriebs 7 demzufolge eine von mehreren möglichen Positionen einnehmen. Wenn alle Zellen als Bezugspunkte herangezogen werden, entspricht die Anzahl der möglichen Positionen der Anzahl der Zellen.

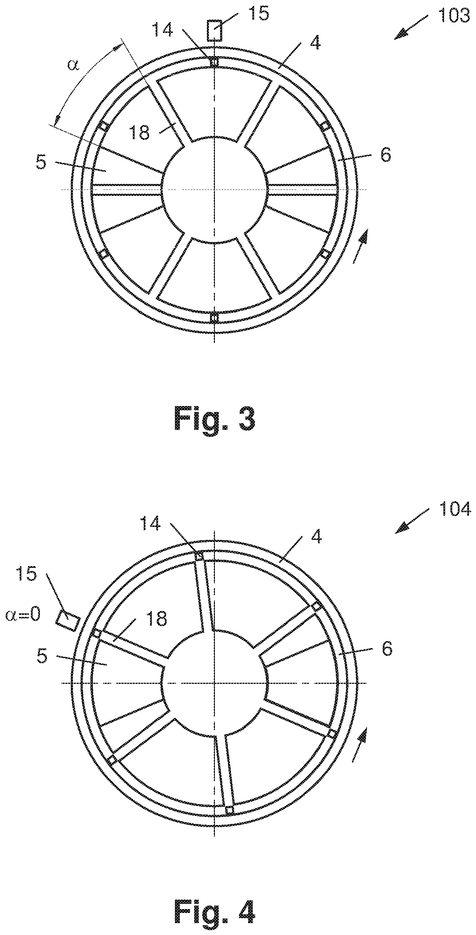

Fig. 3 zeigt dazu ein Beispiel einer Zellenradschleuse 103 in Draufsicht mit abgenommenen Gehäuseoberteil 2, wobei das Zellenrad 6 eine der Zellen entsprechende Anzahl an Magneten 14 aufweist und sich in der mit dem Pfeil angegebenen Richtung gegen den Uhrzeigersinn dreht. Vorteilhaft ist, dass das Zellenrad 6 nach dem Ausschaltbefehl maximal für einen Drehwinkel von 60° nachläuft und daher statistisch gesehen schneller zum Stillstand kommt und weniger rieselfähiges Gut passieren lässt als das in den Figuren 1 und 2 dargestellte Zellenrad 6. Aus der Fig. 3 ist weiterhin erkennbar, dass lediglich ein Reed-Relais 15 notwendig ist und dieses auch nicht notgedrungen im Bereich des Auslasses 5 angeordnet sein muss. Prinzipiell kann der Relativwinkel α beliebig vorgegeben werden. Bei der in der Fig. 3 dargestellten Anordnung ist dieser relativ groß, wohingegen der Relativwinkel α in der in der Fig. 4 dargestellten Anordnung α=0 ist und eine Zellenwand/Transportwand 18 bei einem Ausschaltbefehl beziehungsweise Wegfall des Einschaltbefehls direkt vor dem Auslass 5 angehalten wird. Das Ansprechverhalten der Zellenradschleuse 104 beim Einschalten ist damit besonders gut. In der Fig. 4 wurde für das Reed-Relais 15 rein beispielhaft auch eine Position nahe beim Auslass 5 gewählt.

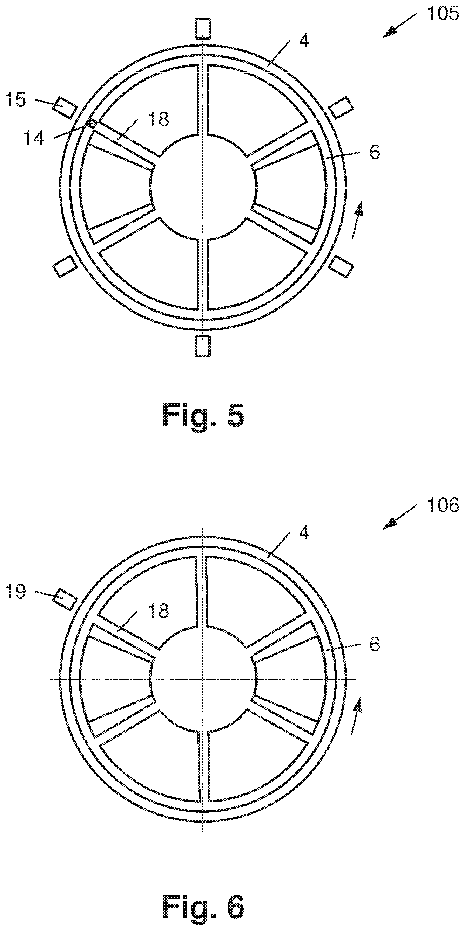

Fig. 5 zeigt eine Variante einer Zellenradschleuse 105, bei welcher das Zellenrad 6 nur einen Magneten 14 aufweist, rund um die Zellenradschleuse 105 jedoch eine der Zellen entsprechende Anzahl an Reed-Relais 15 angeordnet ist. Auch auf diese Weise kommt das Zellenrad 6 bei einem Ausschaltbefehl beziehungsweise Wegfall des Einschaltbefehls rasch an einer vorgegebenen Position zum Stillstand. In der Fig. 5 wird das Zellenrad 6 beispielhaft etwas vor dem Auslass 5 angehalten.

Fig. 6 zeigt eine Variante einer Zellenradschleuse 106, bei der ein induktiver Näherungssensor 19 im Bereich des Gehäuses 2, 4 angeordnet ist. Im Speziellen ist in diesem Beispiel lediglich ein einziger induktiver Näherungssensor 19 vorgesehen. Dabei macht man sich den Umstand zu Nutze, dass das vom induktiven Näherungssensor 19 erzeugte elektromagnetische Feld im Bereich einer Zellenwand 18 stärker beeinflusst wird als in einer anderen Stellung des Zellenrads 6. Auf Magneten 14 kann in diesem Fall verzichtet werden. Strukturell ist die in der Fig. 6 dargestellte Ausführungsvariante ähnlich den in den Figuren 3 und 4 dargestellten Ausführungsformen, da ebenfalls nur ein einziger Sensor nötig ist, um das Zellenrad 6 in sechs verschiedenen Stellungen anzuhalten.

In den bisher gezeigten Beispielen wurde davon ausgegangen, dass das Zellenrad 6 bei einem Ausschaltbefehl / Wegfall des Einschaltbefehls im Hinblick auf den zwischen der Zelle/Zellenwand 18 des Zellenrads 6 und dem Einlass 3 beziehungsweise dem Auslass 5 liegenden Relativwinkel α im Wesentlichen immer an derselben Position angehalten wird. Mit anderen Worten wird das Zellenrad 6 beim Ausschalten des Antriebs 7 derart angehalten, dass ein zwischen der Zelle/Zellenwand 18 des Zellenrads 6 und dem Einlass 3 / Auslass 5 liegender Relativwinkel α im Wesentlichen immer gleich ist. Die Ruheposition des Zellenrads 6 ist also fix vorgegeben.

Dies ist aber keine zwingende Bedingung, sondern die Ruheposition des Zellenrads 6 kann auch vorgebbar (einstellbar) sein. In diesem Fall kann vorgesehen sein, dass der Antrieb 7 bei Erkennung eines Befehls zum Ausschalten so lange nachläuft, bis der zwischen einer Zelle / Zellenwand 18 des Zellenrads 6 und dem Einlass 3 / Auslass 5 liegende Relativwinkel α den vorgebbaren Wert erreicht hat. Beispielsweise kann dazu das Reed-Relais 15 beziehungsweise der induktive Näherungssensor 19 verstellbar sein. Denkbar wäre auch, dass das Zellenrad 6 mehrere Magneten 14 aufweist, welche in geringerem Abstand zueinander angeordnet sind als die Zellenwände 18. Durch Zählen der bei Drehung des Zellenrads 6 auftretenden Impulse am Reed-Relais 15 kann das Zellenrad 6 in einer vorgebbaren Stellung angehalten werden.

Besonders vorteilhaft ist es jedoch, wenn die Mittel zur Bestimmung des genannten Relativwinkels α durch einen Drehwinkelgeber gebildet sind, welcher auf der Welle 11 oder auf der Motorwelle angeordnet ist. Solche (digitalen oder analogen) Drehwinkelgeber weisen zumeist eine sehr hohe Winkelauflösung auf, wodurch das Zellenrad 6 in einer nahezu beliebigen Position angehalten werden kann. Selbstverständlich kann ein solcher Drehwinkelgeber auch bei Einsatz eines Getriebes 17 verwendet werden. Insbesondere wenn das Getriebe 17 drehzahlsenkend ist, erlaubt ein motorseitig montierter Drehgeber eine besonders hohe Auflösung des Drehwinkels des Zellenrads 6. Generell ist es selbstverständlich auch möglich, den Drehwinkelgeber im Motor 7 zu integrieren respektive einen Motor 7 einzusetzen, der mit einem Drehwinkelgeber ausgerüstet ist. Prinzipiell können Gleichstrommotoren, Synchronmotoren und Asynchronmotoren gleichermaßen als Antrieb 7 genutzt werden. Selbstverständlich kann der Drehwinkelgeber auch auf einer Welle des Getriebes 17 angeordnet sein.

In einer weiteren vorteilhaften Ausführungsvariante wird ein Schrittmotor 7 eingesetzt. Dieser ermöglicht das Anhalten des Zellenrads 6 in einer nahezu beliebigen Position auch ohne den Einsatz eines Drehwinkelgebers.

Generell kann die Drehzahl des Zellenrads 6 entsprechend des durch die Zellenradschleuse 101..106 zu führenden Materialstroms eingestellt werden, was wiederum besonders gut bei Einsatz eines Drehwinkelgebers oder Schrittmotors gelingt. Prinzipiell kann die Drehzahl des Zellenrads 6 mit Hilfe einer der Anordnungen nach den Figuren 1 bis 6 eingestellt werden.

Vorteilhaft ist es weiterhin, wenn ein Zeitpunkt zum Ausschalten des Antriebs 7 entsprechend der durch die Zellenradschleuse 101..106 zu führenden Materialmenge und anhand der seit dem Einschalten des Antriebs 7 verstrichenen Zeit und der Drehzahl des Zellenrads 6 oder anhand des seit dem Einschalten des Antriebs 7 vom Zellenrad 6 zurückgelegten Drehwinkels eingestellt wird. Auf diese Weise kann die Zellenradschleuse 101..106 gut zum Portionieren des rieselfähigen Guts eingesetzt werden. Besonders vorteilhaft ist es dabei, wenn die zwischen einem Einschalten und einem Ausschalten des Antriebs 7 durch die Zellenradschleuse 101..106 geführte Materialmenge einem ganzzahligen Vielfachen der im Zellenrad 6 oder der in einer Zelle des Zellenrads 6 aufgenommenen Menge entspricht. Wenn die vorgegebenen Menge nicht direkt die obige Bedingung erfüllt, kann auch vorgesehen sein, dass ein vorgegebener Sollwert für die durch die Zellenradschleuse 101..106 zu führenden Materialmenge auf ein ganzzahliges Vielfaches der im Zellenrad 6 respektive in einer Zelle des Zellenrads 6 aufgenommenen Menge auf- oder abgerundet wird.

Vorteilhaft ist es generell, wenn die Anzahl der Zellen des Zellenrads 6 nicht ganzzahlig durch die Anzahl der Auslässe 5 teilbar ist. Auf diese Weise ergeben sich bei einer beliebigen Stellung des Zellenrads 6 zumindest teilweise verschiedene Differenzwinkel zwischen den Auslässen 5 und den Zellen des Zellenrads 6. Dadurch kann die Nachlaufzeit des Zellenrads 6 reduziert werden, da wegen der verschiedenen Differenzwinkel auch ein kleinster Differenzwinkel existiert. Von Vorteil ist es nun, für die Positionierung des Zellenrads 6 jene Zellenradwand 18 heranzuziehen, die den kleinsten Differenzwinkel zur endgültigen Position vor einem Auslass 5 aufweist.

In einer weiteren besonders vorteilhaften Variante weist eine Zellenradschleuse 101..106 die folgenden Merkmale auf:
- eine Zelle des Zellenrads 6 ist auf einer Seite von einer in eine Drehrichtung des Zellenrads 6 weisenden Zellenwand/Transportwand 18 begrenzt, welche von einem inneren Durchmesser des Zellenrads 6 zu einem äußeren Durchmesser desselben verläuft,
- das Gehäuse 2, 4 weist mehrere einander paarweise zugeordnete und in Drehrichtung des Zellenrads 6 abwechselnd angeordnete Einlässe 3 und Auslässe 5 auf,
- ein Auslass 5 weist eine Öffnungskante 20 auf, welche von einem inneren Durchmesser des Gehäuses 4 zu einem äußeren Durchmesser desselben verläuft,
- es existiert zumindest ein mit dem Zellenrad 6 konzentrischer Kreis d, welcher die Transportwände 18 des Zellenrads 6 an mehreren Zellenrad-Schnittpunkten X1..X7 und die Öffnungskanten 20 der Auslässe 5 an mehreren Auslass-Schnittpunkten Y1..Y3 schneidet, und
- die auf diesem Kreis d zwischen je einem Zellenrad-Schnittpunkt X1..X7 und je einem Auslass-Schnittpunkt Y1..Y3 liegenden Kreisbogenabschnitte sind alle unterschiedlich lang.

Fig. 7 zeigt, was damit gemeint ist. Konkret ist ein Zellenrad 6 mit sieben Zellen und ein Gehäuseunterteil 4 mit drei Auslässen 5 dargestellt, die in diesem Beispiel zwecks besserer Erkennbarkeit schraffiert dargestellt sind. Die Zellenwände 18 und die Öffnungskanten 20 verlaufen jeweils (streng) radial. Denkbar wäre natürlich auch, dass die Zellenwände 18 und Öffnungskanten 20 bogenförmig nach außen verlaufen und somit eine Radialkomponente und eine Tangentialkomponente aufweisen.

Rein beispielhaft ist in der Fig. 7 der Kreisbogen d eingezeichnet, welcher die Zellenwände 18 und Öffnungskanten 20 an den Zellenrad-Schnittpunkten X1..X7 und Auslass-Schnittpunkten Y1..Y3 schneidet (in der Fig. 7 sind die Zellenrad-Schnittpunkte X1..X7 und Auslass-Schnittpunkte Y1..Y3 in radial nach außen führender Richtung beschriftet) Selbstverständlich ist dies nicht der einzige Kreis d, welcher diese Bedingung erfüllt, sondern es existieren noch weitere.

Die auf diesem Kreis d zwischen je einem Zellenrad-Schnittpunkt X1..X7 und je einem Auslass-Schnittpunkt Y1..Y3 liegenden Kreisbogenabschnitte sind alle jeweils unterschiedlich lang. Beispielsweise weist der zwischen dem Zellenrad-Schnittpunkt X1 und dem Auslass-Schnittpunkt Y2 liegende Kreisbogenabschnitt eine andere Länge auf als der zwischen dem Zellenrad-Schnittpunkt X2 und dem Auslass-Schnittpunkt Y3 liegende Kreisbogenabschnitt. Kein Kreisbogenabschnitt weist dieselbe Länge auf wie ein anderer Kreisbogenabschnitt.

Das heißt mit anderen Worten dass die Differenzwinkel zwischen den Auslässen 5 und den Zellen des Zellenrads 6 bei einer beliebigen Stellung des Zellenrads (alle) unterschiedlich groß sind. Vom Drehpunkt des Zellenrads 6 können Zellenrad-Radialstrahlen zu den Zellenrad-Schnittpunkten X1..X7 und Auslass-Radialstrahlen zu den Auslass-Schnittpunkten Y1..Y3 gezogen werden. Die Differenzwinkel zwischen einem Zellenrad-Radialstrahl und einen Auslass-Radialstrahl sind alle unterschiedlich groß.

Noch einmal anders ausgedrückt ist das kleinste gemeinsame Vielfache des zwischen zwei aufeinanderfolgen Zellenwänden 18 liegenden Zellwinkels und des zwischen zwei aufeinanderfolgenden Öffnungskanten 20 liegenden Auslasswinkels größer oder gleich 360°. Auch auf diese Weise können die oben genannten Vorteile erzielt werden. Die Bedingung gilt jedoch nur dann, wenn die Zellenwände 18 und Öffnungskanten 20 gleichmäßig über den Umfang verteilt sind. Prinzipiell ist jedoch auch eine ungleichmäßige Aufteilung der Zellenwände 18 und/oder Öffnungskanten 20 über den Umfang möglich, um die erwähnten Vorteile zu erzielen, das heißt die auf dem Kreis d zwischen je einem Zellenrad-Schnittpunkt X1..X7 und je einem Auslass-Schnittpunkt Y1..Y3 liegenden Kreisbogenabschnitte alle unterschiedlich lang auszuführen.

Auf diese Weise kann die Nachlaufzeit des Zellenrads 6 noch weiter reduziert werden, da die Differenzwinkel zwischen den einzelnen Zellwänden/Transportwänden 18 und den einzelnen Öffnungskanten 20 unterschiedlich groß sind und daher auch ein kleinster Differenzwinkel existiert. Für das in der Fig. 7 konkret dargestellte Beispiel bedeutet dies, dass es von Vorteil ist, das Zellenrad 6 so lange nachlaufen zu lassen, bis der Zellenrad-Schnittpunkt X3 den Auslass-Schnittpunkt Y2 erreicht hat. Die zweitbeste Möglichkeit besteht darin, das Zellenrad 6 so lange nachlaufen zu lassen, bis der Zellenrad-Schnittpunkt X1 den Auslass-Schnittpunkt Y1 erreicht hat, die drittbeste darin, das Zellenrad 6 so lange nachlaufen zu lassen, bis der Zellenrad-Schnittpunkt X6 den Auslass-Schnittpunkt Y3 erreicht hat. Weniger vorteilhaft, wenngleich auch möglich ist es, das Zellenrad 6 so lange nachlaufen zu lassen, bis der Zellenrad-Schnittpunkt X5 den Auslass-Schnittpunkt Y3 erreicht hat.

Fig. 8 zeigt schließlich ein konkretes Anwendungsgebiet für eine Zellenradschleuse 101..107. Diese ist in dem in der Fig. 8 dargestellten Beispiel Teil einer Sandungsanlage 16 eines Schienenfahrzeugs 21. Die Sandungsanlage 16 umfasst eine Zellenradschleuse 101..107, einen Sandbehälter 8, einen Sammler 10, einen Motor 7 sowie eine Steuerung/Regelung 13. Der Sammler 10 ist an einen Kompressor 22 angeschlossen und auch mit einer Abführleitung 9 mit einem Fallrohr 23 verbunden. Im konkreten Beispiel umfasst das Schienenfahrzeug 21 zwei Sandungsanlagen 16, die mit einer zentralen Steuerung 24 verbunden sind.

Bei einer Bremsung veranlasst die zentrale Steuerung 24 die Motorsteuerung 13 der Zellenradschleuse 101..107 zum Aktivieren des Motors 7 und damit zum Drehen des Zellenrads 6. Dabei ist beispielsweise ein Einschaltbefehl für den Motor 7 mit einem Bremsbefehl für das Schienenfahrzeug 21 und/oder einem Befehl zum Anfahren des Schienenfahrzeugs 21 gekoppelt. Gleichzeitig wird auch der Kompressor 22 oder, sofern der Kompressor 22 ohnehin läuft, lediglich ein Magnetventil in der Druckluftleitung aktiviert. Dadurch wird Bremssand dosiert vom Behälter 8 zum Fallrohr 23 transportiert und fällt von dort vor die Räder des Schienenfahrzeugs 21, um die Traktion beim Bremsen und beim Anfahren zu erhöhen.

Wenn kein Bremssand mehr benötigt wird, beispielsweise weil das Schienenfahrzeug 21 zum Stillstand gekommen ist, wird von der zentralen Steuerung 24 ein Ausschaltbefehl an die Steuerung 13 gesendet, oder es wird einfach der Einschaltbefehl aufgehoben. Das Zellenrad 6 kommt aber nicht sofort zum Stillstand, sondern läuft in der oben beschriebenen Weise noch nach, bis es eine definierte Position erreicht hat. Auf diese Weise wird das Ansprechverhalten der Zellenradschleuse 101..107 verbessert, wodurch sich der Bremsweg des Schienenfahrzeugs 21 beziehungsweise die zum Anfahren benötigte Zeit verkürzt. Nach Wegfall des Sandungssignals vom Schienenfahrzeug 21 wird auch der Kompressor 22 respektive das Magnetventil vorteilhaft noch so lange angesteuert, bis der noch in der Leitung 9 befindliche Sand ausgebracht wurde.

In einer vorteilhaften Ausführungsform wird ein Nachlaufen des Motors 7 von der Steuerung 13 nur dann eingeleitet, wenn das Schienenfahrzeug 21 eine vorgebbare Mindestgeschwindigkeit überschreitet. Alternativ oder zusätzlich kann ein Nachlaufen des Motors 7 mit einer von der Geschwindigkeit des Schienenfahrzeugs 21 abhängigen Drehzahl erfolgen. Auf diese Weise werden Anhäufungen von Bremssand auf den Schienen bei langsamer Fahrt oder beim Halt des Schienenfahrzeugs 21 und in Folge ein fehlerhaftes Verhalten einer elektronischen Gleis-Besetzt-Detektion vermieden. Anhäufungen von Bremssand können den elektrischen Widerstand zwischen Gleis und Schienenfahrzeug 21 so weit hinaufsetzen, dass ein von einem Schienenfahrzeug 21 besetztes Gleis nicht mehr als solches erkannt wird. Durch die oben genannten Maßnahmen können schwere Unfälle mit Personenschaden und Sachschaden vermieden werden.

An dieser Stelle wird darauf hingewiesen, dass das Zellenrad 6 in der Fig. 8 der besseren Aussagekraft der schematischen Darstellung mit horizontal ausgerichteter Drehachse des Zellenrads 6 gezeichnet wurde. Selbstverständlich bezieht sich die Fig. 8 uneingeschränkt auch für Zellenräder 6 mit vertikal ausgerichteter Drehachse und somit insbesondere auf die in den Figuren 1 bis 7 dargestellten Ausführungsformen. Generell gilt die im Zusammenhang mit den Figuren 1 bis 7 offenbarte Lehre natürlich nicht nur für Zellenräder 6 mit vertikal ausgerichteter Drehachse, sondern uneingeschränkt auch auf Zellenräder 6 mit horizontal ausgerichteter Drehachse. Auch dort wird mit Hilfe der getroffenen Maßnahmen eine Verbesserung der Ansprechzeit erzielt.

Die Ausführungsbeispiele zeigen mögliche Ausführungsvarianten einer erfindungsgemäßen Zellenradschleuse 100..107, einer erfindungsgemäßen Sandungsanlage 16 sowie eines erfindungsgemäßen Schienenfahrzeugs 21, wobei an dieser Stelle bemerkt sei, dass die Erfindung nicht auf die speziell dargestellten Ausführungsvarianten desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Im Speziellen wird darauf hingewiesen, dass obwohl ein Teil der Ausführungsbeispiele auf eine Anwendung der vorgestellten Zellenradschleuse 100..107 in einer Sandungsanlage 16 eines Schienenfahrzeugs 21 gerichtet sind, die Zellenradschleuse 100..107 natürlich auch in anderen technischen Gebieten eingesetzt werden kann, beispielsweise in industriellen und/oder chemischen Anlagen zum Portionieren beziehungsweise Dosieren von zu verarbeitenden Stoffen.

Insbesondere wird festgehalten, dass die dargestellten Vorrichtungen in der Realität auch mehr oder auch weniger Bestandteile als dargestellt umfassen können.

Im Speziellen wird darüber hinaus noch darauf hingewiesen, dass der in den Figuren dargestellte umfangsseitige Ring des Zellenrads 6 zwar von Vorteil, jedoch nicht zwingend für die vorgeschlagenen Maßnahmen ist. Selbstverständlich ist die offenbarte technische Lehre uneingeschränkt auch auf Zellenräder 6 ohne umfangsseitigen Ring anwendbar.

Weiterhin wird darauf hingewiesen, dass obwohl das Zellenrad 6 in den präsentierten Beispielen relativ zu einem Auslass 5 positioniert wurde, selbstverständlich auch eine Positionierung relativ zu einem Einlass 3 möglich ist, zumal diese gegenüber den Auslässen 5 ja fix angeordnet sind.

Der Ordnung halber sei abschließend darauf hingewiesen, dass zum besseren Verständnis des Aufbaus der Zellenradschleuse 100..107, der Sandungsanlage 16 sowie des Schienenfahrzeugs 21 diese/dieses bzw. deren/dessen Bestandteile teilweise nicht maßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 101..107: Zellenradschleuse
- 2: Gehäuseoberteil
- 3: Einlass
- 4: Gehäuseunterteil
- 5: Auslass

- 6: Zellenrad
- 7: Antrieb/Motor
- 8: Sandbehälter/Sandkasten
- 9: Abführrohr/Ableitung
- 10: Sammler

- 11: Welle
- 12: Aktivator/Rührer
- 13: Motorsteuerung/-regelung
- 14: Magnet
- 15: Sensor für Magnetfeld

- 16: Sandungsanlage/Streugerät
- 17: Getriebe
- 18: Zellenwand/Transportwand
- 19: induktiver Näherungssensor
- 20: Öffnungskante

- 21: Schienenfahrzeug
- 22: Verdichter
- 23: Fallrohr
- 24: zentrale Steuerung

- α: Relativwinkel Zellenwand/Öffnungskante
- d: Kreis
- X1..X7: Schnittpunkt Kreis/Zellenwand
- Y1..Y3: Schnittpunkt Kreis/Öffnungskante

## Patentansprüche

1. Zellenradschleuse (101..107), umfassend
- ein Gehäuse (2, 4) mit einem Einlass (3) und einem Auslass (5),
- ein im Gehäuse drehbar gelagertes Zellenrad (6) mit mehreren Zellen und
- einen Antrieb (7) für das Zellenrad (6),
**gekennzeichnet durch**
eine mit dem Antrieb (7) verbundene Steuerung/Regelung (13), welche dazu eingerichtet ist, den Antrieb (7) bei Erkennung eines Ausschaltbefehls oder Wegfall eines Einschaltbefehls so lange nachlaufen zu lassen, bis das Zellenrad (6) eine im Hinblick auf einen zwischen einer Zelle des Zellenrads (6) und dem Einlass (3) / Auslass (5) liegenden Relativwinkel (α) vorgegebene oder vorgebbare Position erreicht hat.

2. Zellenradschleuse (101..107) nach Anspruch 1, **gekennzeichnet durch** Mittel (14, 15, 19) zur Bestimmung des Relativwinkels (α) zwischen Zellenrad (6) und Gehäuse (2, 4).

3. Zellenradschleuse (101..107) nach Anspruch 2, **dadurch gekennzeichnet, dass** die Mittel zur Bestimmung des genannten Relativwinkels (α) durch zumindest einen im Bereich des Gehäuses (2, 4) angeordneten, induktiven Näherungssensor (19) gebildet sind.

4. Zellenradschleuse (101..107) nach Anspruch 2, **dadurch gekennzeichnet, dass** die Mittel zur Bestimmung des genannten Relativwinkels (α) durch zumindest einen am oder im Zellenrad (6) angeordneten Magneten (14) und durch zumindest einen im Bereich des Gehäuses (2, 4) angeordneten Sensor (15) zur Erfassung eines Magnetfelds gebildet sind.

5. Zellenradschleuse (101..107) nach Anspruch 2, **dadurch gekennzeichnet, dass** die Mittel zur Bestimmung des genannten Relativwinkels (α) durch einen Drehwinkelgeber gebildet sind, welcher auf einer Welle (11) des Zellenrads (6) angeordnet ist.

6. Zellenradschleuse (101..107) nach Anspruch 2, **dadurch gekennzeichnet, dass** der Antrieb (7) durch einen Rotationsmotor gebildet ist oder einen solchen umfasst und die Mittel zur Bestimmung des genannten Relativwinkels (α) durch einen Drehwinkelgeber gebildet sind, welcher auf einer Welle des Rotationsmotors angeordnet ist, beziehungsweise der Rotationsmotor mit einem Drehwinkelgeber ausgerüstet ist.

7. Zellenradschleuse (101..107) nach einem der Ansprüche 1 bis 6, **dadurch gekennzeichnet, dass** der Antrieb (7) durch einen Schrittmotor gebildet ist oder einen solchen umfasst.

8. Zellenradschleuse (101..107) nach einem der Ansprüche 1 bis 7, **dadurch gekennzeichnet, dass** die Anzahl der Zellen des Zellenrads (6) nicht ganzzahlig durch die Anzahl der Auslässe (5) teilbar ist.

9. Zellenradschleuse (101..107) nach einem der Ansprüche 1 bis 8, **dadurch gekennzeichnet, dass**
- eine Zelle des Zellenrads (6) auf einer Seite von einer in eine Drehrichtung des Zellenrads (6) weisenden Zellenwand/Transportwand (18) begrenzt ist, welche von einem inneren Durchmesser des Zellenrads (6) zu einem äußeren Durchmesser desselben verläuft,
- das Gehäuse (2, 4) mehrere einander paarweise zugeordnete und in Drehrichtung des Zellenrads (6) abwechselnd angeordnete Einlässe (3) und Auslässe (5) aufweist,
- ein Auslass (5) eine Öffnungskante (20) aufweist, welche von einem inneren Durchmesser des Gehäuses (2, 4) zu einem äußeren Durchmesser desselben verläuft,
- zumindest ein mit dem Zellenrad (6) konzentrischer Kreis (d) existiert, welcher die Transportwände (18) des Zellenrads (6) an mehreren Zellenrad-Schnittpunkten (X1..X7) und die Öffnungskanten (20) der Auslässe (5) an mehreren Auslass-Schnittpunkten (Y1..Y3) schneidet, und
- die auf diesem Kreis (d) zwischen je einem Zellenrad-Schnittpunkt (X1..X7) und je einem Auslass-Schnittpunkt (Y1..Y3) liegenden Kreisbogenabschnitte alle unterschiedlich lang sind.

10. Zellenradschleuse (101..107) nach einem der Ansprüche 1 bis 9, **dadurch gekennzeichnet, dass** das kleinste gemeinsame Vielfache des zwischen zwei aufeinanderfolgen Zellenwänden (18) liegenden Zellwinkels und des Auslasswinkels, der zwischen zwei Öffnungskanten (20) zweier aufeinanderfolgender Auslässe (5) liegt, größer oder gleich 360° ist.

11. Sandungsanlage/Streugerät (16) für ein Schienenfahrzeug (21), umfassend eine Zellenradschleuse (101..107) nach einem der Ansprüche 1 bis 10, **gekennzeichnet durch**
- einen mit dem Einlass (3) der Zellenradschleuse (101..107) verbundenen Behälter (8) zur Aufnahme von Bremssand oder eine mit dem Einlass (3) der Zellenradschleuse (101..107) verbundenen Zuleitung zum Antransport von Bremssand und
- eine mit dem Auslass (5) der Zellenradschleuse (101..107) verbundenen Ableitung (10) zum Abtransport von Bremssand.

12. Sandungsanlage/Streugerät (16) nach Anspruch 11, **dadurch gekennzeichnet, dass** die Steuerung/Regelung (13) dazu eingerichtet ist, den Antrieb (7) bei Erkennung eines Ausschaltbefehls und/oder Wegfall eines Einschaltbefehls
a) nur dann nachlaufen zu lassen, wenn das Schienenfahrzeug (21) eine vorgebbare Mindestgeschwindigkeit überschreitet, und/oder
b) mit einer von der Geschwindigkeit des Schienenfahrzeugs (21) abhängigen Drehzahl nachlaufen zu lassen.

13. Schienenfahrzeug (21), **gekennzeichnet durch** eine Sandungsanlage (16) nach Anspruch 11 oder 12.

14. Verfahren zum Betrieb einer Zellenradschleuse (101..107), aufweisend ein Gehäuse (2, 4) mit einem Einlass (3) und einem Auslass (5), ein im Gehäuse (2, 4) drehbar gelagertes Zellenrad (6) und einen Antrieb (7) für das Zellenrad (6),
**dadurch gekennzeichnet, dass**
der Antrieb (7) bei Erkennung eines Ausschaltbefehls und/oder Wegfall eines Einschaltbefehls so lange nachläuft, bis das Zellenrad (6) eine im Hinblick auf einen zwischen einer Zelle des Zellenrads (6) und dem Einlass (3) / Auslass (5) liegenden Relativwinkel (α) vorgegebene oder vorgebbare Position erreicht hat.

15. Verfahren nach Anspruch 14, **dadurch gekennzeichnet, dass** das Zellenrad (6) beim Ausschalten des Antriebs (7) so angehalten wird, dass eine Begrenzungswand (18) einer Zelle (6) unmittelbar vor dem Auslass (5) zu liegen kommt.

16. Verfahren nach einem der Ansprüche 14 bis 15, **dadurch gekennzeichnet, dass** die Drehzahl des Zellenrads (6) entsprechend des durch die Zellenradschleuse (101..107) zu führenden Materialstroms eingestellt wird.

17. Verfahren nach einem der Ansprüche 14 bis 16, **dadurch gekennzeichnet, dass** ein Zeitpunkt zum Ausschalten des Antriebs (7) entsprechend der durch die Zellenradschleuse (101..107) zu führenden Materialmenge und
- anhand der seit dem Einschalten des Antriebs (7) verstrichenen Zeit und der Drehzahl des Zellenrads (6) oder
- anhand des seit dem Einschalten des Antriebs (7) vom Zellenrad (6) zurückgelegten Drehwinkels eingestellt wird.

18. Verfahren nach einem der Ansprüche 14 bis 17, **dadurch gekennzeichnet, dass** die zwischen einem Einschalten und einem Ausschalten des Antriebs (7) durch die Zellenradschleuse (101..107) geführte Materialmenge einem ganzzahligen Vielfachen der im Zellenrad (6) oder der in einer Zelle des Zellenrads (6) aufgenommenen Menge entspricht.

19. Verfahren nach Anspruch 18, **dadurch gekennzeichnet, dass** ein vorgegebener Sollwert für die durch die Zellenradschleuse (101..107) zu führenden Materialmenge auf ein ganzzahliges Vielfaches der im Zellenrad (6) respektive in einer Zelle des Zellenrads (6) aufgenommenen Menge auf- oder abgerundet wird.

20. Verfahren nach einem der Ansprüche 14 bis 19 in einer Sandungsanlage (16) eines Schienenfahrzeugs (21).

21. Verfahren nach Anspruch 20, **dadurch gekennzeichnet, dass** der Antrieb (7) bei Erkennung eines Ausschaltbefehls und/oder Wegfall eines Einschaltbefehls
a) nur dann nachläuft, wenn das Schienenfahrzeug (21) eine vorgebbare Mindestgeschwindigkeit überschreitet, und/oder
b) mit einer von der Geschwindigkeit des Schienenfahrzeugs (21) abhängigen Drehzahl nachläuft.

## Claims

1. A cellular rotary valve (101..107), comprising
- a housing (2, 4) having an inlet (3) and an outlet (5),
- a cellular wheel (6) mounted in the housing such that it is able to rotate and having a plurality of cells, and
- a drive unit (7) for the cellular wheel (6),
**characterised in that**
a control/regulating system (13), which is connected to the drive unit (7) and configured to allow the drive unit (7), when it detects a switch-off command or the cessation of a switch-on command, to continue to run until the cellular wheel (6) has reached a position that is or can be pre-set with regard to a relative angle (α) between a cell of the cellular wheel (6) and the inlet (3)/outlet (5).

2. A cellular rotary valve (101..107) according to claim 1, **characterised by** means (14, 15, 19) for determining the relative angle (α) between the cellular wheel (6) and the housing (2, 4).

3. A cellular rotary valve (101..107) according to claim 2, **characterised in that** the means for determining the aforementioned relative angle (α) take the form of at least one inductive proximity sensor (19) arranged in the region of the housing (2, 4).

4. A cellular rotary valve (101..107) according to claim 2, **characterised in that** the means for determining the aforementioned relative angle (α) take the form of at least one magnet (14) arranged on or in the cellular wheel (6) and at least one sensor (15) arranged in the region of the housing (2, 4) for detecting a magnetic field.

5. A cellular rotary valve (101..107) according to claim 2, **characterised in that** the means for determining the aforementioned relative angle (α) take the form of a rotary encoder, which is arranged on a shaft (11) of the cellular wheel (6).

6. A cellular rotary valve (101..107) according to claim 2, **characterised in that** the drive unit (7) takes the form of or comprises a rotation motor and that either the means for determining the aforementioned relative angle (α) take the form of a rotary encoder, which is arranged on a shaft of the rotation motor, or the rotation motor is equipped with a rotary encoder.

7. A cellular rotary valve (101..107) according to any of claims 1 to 6, **characterised in that** the drive unit (7) takes the form of or comprises a step motor.

8. A cellular rotary valve (101..107) according to any of claims 1 to 7, **characterised in that** the number of cells in the cellular wheel (6) is not an integer multiple of the number of outlets (5).

9. A cellular rotary valve (101..107) according to any of claims 1 to 8, **characterised in that**
- a cell of the cellular wheel (6) is delimited on one side by a cell wall/transport wall (18) pointing in the direction of rotation of the cellular wheel (6) that runs from an inner diameter of the cellular wheel (6) to an outer diameter of the cellular wheel (6),
- the housing (2, 4) has a plurality of paired inlets (3) and outlets (5) arranged alternately in the direction of rotation of the cellular wheel (6),
- an outlet (5) has an opening edge (20) that runs from an inner diameter of the housing (2, 4) to an outer diameter of the housing (2, 4),
- there exists a least one circle (d), which is concentric with the cellular wheel (6) and intersects the transport walls (18) of the cellular wheel (6) at a plurality of cellular wheel intersection points (XI..X7) and the opening edges (20) of the outlets (5) at a plurality of outlet intersection points (Y1..Y3), and
- the arc sections lying on this circle (d) between each cellular wheel intersection point (X1..X7) and the corresponding outlet intersection point (Y1..Y3) are all of different lengths.

10. A cellular rotary valve (101..107) according to any of claims 1 to 9, **characterised in that** the smallest common multiple of the cell angle between two successive cell walls (18) and the outlet angle between two opening edges (20) of two successive outlets (5) is greater than or equal to 360°.

11. A sanding system/spreader (16) for a rail vehicle (21) comprising a cellular rotary valve (101..107) according to any of claims 1 to 10, **characterised by**
- a container (8) connected to the inlet (3) of the cellular rotary valve (101..107) for receiving brake sand or a feed line connected to the inlet (3) of the cellular rotary valve (101..107) for delivering brake sand and
- a discharge line (10) connected to the outlet (5) of the cellular rotary valve (101..107) for evacuating brake sand.

12. A sanding system/spreader (16) according to claim 11, **characterised in that** the control/regulating system (13) is configured to allow the drive unit (7), when it detects a switch-off command or the cessation of a switch-on command,
a) to continue to run only if the rail vehicle (21) exceeds a pre-settable minimum speed, and/or
b) to continue to run at a rotational speed dependent on the speed of the rail vehicle (21).

13. A rail vehicle (21) **characterised by** a sanding system (16) according to claim 11 or 12.

14. A process for operating a cellular rotary valve (101..107) comprising a housing (2, 4) with an inlet (3) and an outlet (5), a cellular wheel mounted in the housing (2, 4) such that it is able to rotate and a drive unit (7) for the cellular wheel (6),
**characterised in that**
when it detects a switch-off command or the cessation of a switch-on command, the drive unit (7) continues to run until the cellular wheel (6) has reached a position which has been or can be pre-set with regard to a relative angle (α) between a cell of the cellular wheel (6) and the inlet (3)/outlet (5).

15. A process according to claim 14, **characterised in that** when the drive unit (7) is switched off, the cellular wheel (6) is stopped such that a boundary wall (18) of a cell (6) comes to rest immediately in front of the outlet (5).

16. A process according to any of claims 14 to 15, **characterised in that** the rotational speed of the cellular wheel (6) is set according to the flow of material to be fed through the cellular rotary valve (101..107).

17. A process according to any of claims 14 to 16, **characterised in that** a time for switching off the drive unit (7) is set according to the amount of material to be fed through the cellular rotary valve (101..107) and
- using the time elapsed since the drive unit (7) was switched on and the rotational speed of the cellular wheel (6) or
- using the angle of rotation covered since the drive unit (7) of the cellular wheel (6) was switched on.

18. A process according to any of claims 14 to 17, **characterised in that** the amount of material fed through the cellular rotary valve (101..107) between switching on and switching off the drive unit (7) corresponds to an integer multiple of the amount held in the cellular wheel (6) or in a cell of the cellular wheel (6).

19. A process according to claim 18, **characterised in that** a pre-set reference value for the amount of material to be fed through the cellular rotary valve (101..107) is rounded up or down to an integer multiple of the amount held in the cellular wheel (6) or in a cell of the cellular wheel (6).

20. A process according to any of claims 14 to 19 in a sanding system (16) of a rail vehicle (21).

21. A process according to claim 20, **characterised in that** when the drive unit (7) detects a switch-off command and/or the cessation of a switch-on command it
a) continues to runs only if the rail vehicle (21) exceeds a pre-settable minimum speed, and/or
b) continues to run at a rotational speed dependent on the speed of the rail vehicle (21).

## Revendications

1. Fermeture (101...107) rotative, comprenant
- une enveloppe (2, 4) ayant une entrée (3) et une sortie (5),
- une roue (6) cellulaire montée tournante dans l'enveloppe et ayant plusieurs cellules et
- un entraînement (7) de la roue (6) cellulaire,
**caractérisée par**
une commande/régulation (13), qui est reliée à l'entraînement (7) et qui est conçue pour laisser continuer l'entraînement (7) à la détection d'une instruction d'arrêt ou en l'absence d'une instruction de démarrage jusqu'à ce que la roue (6) cellulaire ait atteint, en ce qui concerne un angle (α) relatif entre une cellule de la roue (6) cellulaire et l'entrée (3)/sortie (5), une position donnée à l'avance ou pouvant l'être.

2. Fermeture (101...107) rotative suivant la revendication 1, **caractérisée par** des moyens (14, 15, 19) de détermination de l'angle (α) relatif entre la roue (6) cellulaire et l'enveloppe (2, 4).

3. Fermeture (101...107) rotative suivant la revendication 2, **caractérisée en ce que** les moyens de détermination de l'angle (α) relatif sont formés par au moins un capteur (19) de proximité inductif monté dans la région de l'enveloppe (2, 4).

4. Fermeture (101...107) rotative suivant la revendication 2, **caractérisée en ce que** les moyens de détermination de l'angle (α) relatif sont formés par au moins un aimant (14) monté sur ou dans la roue (6) cellulaire et par au moins un capteur (15), disposé dans la région de l'enveloppe (2, 4) de détection d'un champ magnétique.

5. Fermeture (101...107) rotative suivant la revendication 2, **caractérisée en ce que** les moyens de détermination de l'angle (α) relatif sont formés par un indicateur d'angle de rotation, qui est monté sur un arbre (11) de la roue (6) cellulaire.

6. Fermeture (101...107) rotative suivant la revendication 2, **caractérisée en ce que** l'entraînement (7) est formé par un moteur rotatif ou en comprend un et les moyens de détermination de l'angle (α) relatif sont formés par un indicateur d'angle de rotation, qui est monté sur un arbre du moteur rotatif, où le moteur rotatif est équipé d'un indicateur d'angle de rotation.

7. Fermeture (101...107) rotative suivant l'une des revendications 1 à 6, **caractérisée en ce que** l'entraînement (7) est formé d'un moteur pas-à-pas ou en comprend un.

8. Fermeture (101...107) rotative suivant l'une des revendications 1 à 7, **caractérisée en ce que** le nombre des cellules de la roue (6) cellulaire n'est pas divisible en nombre entier par le nombre des sorties (5).

9. Fermeture (101...107) rotative suivant l'une des revendications 1 à 8, **caractérisée en ce que**
- une cellule de la roue (6) cellulaire est délimitée d'un côté par une paroi de cellule/paroi de transport (18), qui est tournée vers un sens de rotation de la roue (6) cellulaire et qui s'étend d'un diamètre intérieur de la roue (6) cellulaire à un diamètre extérieur de celle-ci,
- l'enveloppe (2, 4) a plusieurs entrées (3) et sorties (5) associées par paire les unes aux autres et disposées en alternance dans le sens de rotation de la roue (6) cellulaire,
- une sortie (5) a un bord (20) d'ouverture, qui s'étend d'un diamètre intérieur de l'enveloppe (2, 4) à un diamètre extérieur de celle-ci,
- il existe au moins un cercle (d) concentrique à la roue (6) cellulaire, qui coupe les parois (8) de transport de la roue (6) cellulaire en plusieurs points (X1...X7) d'intersection de roue cellulaire et les bords (20) d'ouverture des sorties (5) en plusieurs points (Y1...Y3) d'intersection de sortie et
- les segments de cercle, se trouvant sur ce cercle (d) entre respectivement un point (X1...X7) d'intersection de roue cellulaire et respectivement un point (Y1...Y3) d'intersection de sortie, ont tous une longueur différente.

10. Fermeture (101...107) rotative suivant l'une des revendications 1 à 9, **caractérisée en ce que** le plus petit commun multiple de l'angle de cellule, se trouvant entre deux parois (18) de cellule successives et l'angle de sortie, qui est compris entre deux bords (20) d'ouverture de deux sorties (5) successives, est supérieur ou égal à 360°.

11. Installation de sablage/appareil de dispersion (16) pour un véhicule (21) ferroviaire, comprenant une fermeture (101...107) rotative suivant l'une des revendications 1 à 10, **caractérisée par**
- un récipient (8) communiquant avec l'entrée (3) de la fermeture (101...107) rotative, afin de recevoir du sable de freinage, ou un conduit communiquant avec l'entrée (3) de la fermeture (101...107) rotative, afin d'apporter du sable de freinage,
- un conduit (10) d'évacuation communiquant avec la sortie (5) de la fermeture (101...107) rotative pour évacuer du sable de freinage.

12. Installation de sablage/appareil de dispersion (16) suivant la revendication 11, **caractérisée en ce que** la commande/régulation (13) est conçue pour que l'entraînement (7) à la détection d'une instruction d'arrêt et/ou en l'absence d'une instruction de démarrage
a) ne continue à fonctionner que si le véhicule (21) ferroviaire a dépassé une vitesse minimum pouvant être donnée à l'avance et/ou
b) continue à fonctionner à une vitesse de rotation, qui dépend de la vitesse du véhicule (21) ferroviaire.

13. Véhicule (21) ferroviaire, **caractérisé par** une installation (16) de sablage suivant la revendication 11 ou 12.

14. Procédé pour faire fonctionner une fermeture (101...107) rotative, comportant une enveloppe (2, 4) ayant une entrée (3) et une sortie (5), une roue (6) circulaire montée tournante dans l'enveloppe (2, 4) et un entraînement (7) de la roue (6) cellulaire,
**caractérisé en ce que**
l'entraînement (7) à la détection d'une instruction d'arrêt ou en l'absence d'une instruction de démarrage continue jusqu'à ce que la roue (6) cellulaire ait atteint, en ce qui concerne un angle (α) relatif entre une cellule de la roue (6) cellulaire et l'entrée (3)/sortie (5), une position donnée à l'avance ou pouvant l'être.

15. Procédé suivant la revendication 14, **caractérisé en ce que** l'on maintient la roue (6) cellulaire, lors de l'arrêt de l'entraînement (7), de manière à ce qu'une paroi (18) de limitation d'une cellule (6) vienne directement devant la sortie (5).

16. Procédé suivant l'une des revendications 14 à 15, **caractérisé en ce que** l'on règle la vitesse de rotation de la roue (6) cellulaire conformément au courant de matière à faire passer dans la fermeture (101...107) rotative.

17. Procédé suivant l'une des revendications 14 à 16, **caractérisé en ce que** l'on règle un instant d'arrêt de l'entraînement (7) conformément à la quantité de matière à faire passer dans la fermeture (101...107) rotative et
- à l'aide du temps qui s'est écoulé depuis le démarrage de l'entraînement (7) et la vitesse de rotation de la roue (6) cellulaire ou
- à l'aide de l'angle de rotation parcouru par la roue (6) cellulaire depuis le démarrage de l'entraînement (7).

18. Procédé suivant l'une des revendications 14 à 17, **caractérisé en ce que** la quantité de matière passant dans la fermeture (101...107) rotative, entre un démarrage et un arrêt de l'entraînement (7), correspond à un multiple en nombre entier de la quantité dans la roue (6) cellulaire ou reçue dans une cellule de la roue (6) cellulaire.

19. Procédé suivant la revendication 18, **caractérisé en ce que** l'on arrondit vers le haut ou vers le bas une valeur de consigne donnée à l'avance de la quantité de matière à faire passer dans la fermeture (101...107) rotative par un multiple en nombre entier de la quantité reçue dans la roue (6) cellulaire, respectivement dans une cellule de la roue (6) cellulaire.

20. Procédé suivant l'une des revendications 14 à 19, dans une installation (16) de sablage d'un véhicule (21) ferroviaire.

21. Procédé suivant la revendication 20, **caractérisé en ce que** l'entraînement (7) à la détection d'une instruction d'arrêt et/ou en l'absence d'une instruction de démarrage
a) ne continue à fonctionner que si le véhicule (21) ferroviaire dépasse une vitesse minimum donnée à l'avance et/ou
b) continue à fonctionner à une vitesse de rotation qui dépend de la vitesse du véhicule (21) ferroviaire.
